# EUROPEAN PATENT SPECIFICATION

(11) **EP 3 776 368 B1**
(45) Date of publication and mention of the grant of the patent: **31.07.2024**
(21) Application number: 19726181.1
(22) Date of filing: 25.03.2019
(51) Int. Cl.: G06N 3/045

(54) **ADAPTIVE ARTIFICIAL INTELLIGENCE SYSTEM FOR EVENT CATEGORIZING BY SWITCHING BETWEEN DIFFERENT STATES**
SYSTEM MIT ADAPTIVER KÜNSTLICHER INTELLIGENZ ZUR EREIGNISKATEGORISIERUNG DURCH UMSCHALTUNG ZWISCHEN VERSCHIEDENEN ZUSTÄNDEN
SYSTÈME D'INTELLIGENCE ARTIFICIELLE ADAPTATIF POUR CATÉGORISER DES ÉVÉNEMENTS PAR COMMUTATION ENTRE DIFFÉRENTS ÉTATS

(30) Priority: 29.03.2018 NL 2020685
(43) Date of publication of application: 17.02.2021
(73) Proprietor: Kepler Vision Technologies B.V., 1091 SE Amsterdam (NL)
(72) Inventor: STOKMAN, Henricus Meinardus Gerardus, 1091 SE Amsterdam (NL); VAN OLDENBORGH, Marc Jean Baptist, 1091 SE Amsterdam (NL)
(74) Representative: Patent Business B.V.
(86) International application number: PCT/NL2019/050182
(87) International publication number: WO 2019/190312

(56) References cited:
- SCHUMANN ARNE ET AL: "Deep learning prototype domains for person re-identification", 2017 IEEE INTERNATIONAL CONFERENCE ON IMAGE PROCESSING (ICIP), IEEE, 17 September 2017 (2017-09-17), pages 1767 - 1771, XP033322878, DOI: 10.1109/ICIP.2017.8296585
- HENAR MARTIN ET AL: "Towards a fuzzy-based multi-classifier selection module for activity recognition applications", 2012 IEEE INTERNATIONAL CONFERENCE ON PERVASIVE COMPUTING AND COMMUNICATIONS WORKSHOPS, 23 March 2012 (2012-03-23), pages 871 - 876, XP055535593, ISBN: 978-1-4673-0906-6, DOI: 10.1109/PerComW.2012.6197634
- I PUTU EDY SUARDIYANA PUTRA ET AL: "A Cascade-Classifier Approach for Fall Detection", PROCEEDINGS OF THE 5TH EAI INTERNATIONAL CONFERENCE ON WIRELESS MOBILE COMMUNICATION AND HEALTHCARE, "TRANSFORMING HEALTHCARE THROUGH INNOVATIONS IN MOBILE AND WIRELESS TECHNOLOGIES", 2015, XP055534723, ISBN: 978-1-63190-088-4, DOI: 10.4108/eai.14-10-2015.2261619
- TAKHIROV ET AL: "Energy-Efficient Adaptive Classifier Design for Mobile Systems", LOW POWER ELECTRONICS AND DESIGN, 8 August 2016 (2016-08-08), 2 Penn Plaza, Suite 701 New York NY 10121-0701 USA, pages 52 - 57, XP055535271, ISBN: 978-1-4503-4185-1, DOI: 10.1145/2934583.2934615
- YUAN BINGCHUAN ET AL: "A Cloud-Based Mobile Data Analytics Framework: Case Study of Activity Recognition Using Smartphone", 2014 2ND IEEE INTERNATIONAL CONFERENCE ON MOBILE CLOUD COMPUTING, SERVICES, AND ENGINEERING, IEEE, 8 April 2014 (2014-04-08), pages 220 - 227, XP032605928, DOI: 10.1109/MOBILECLOUD.2014.29
- JUYONG KIM ET AL: "SplitNet: Learning to Semantically Split Deep Networks for Parameter Reduction and Model Parallelization", 2017, XP055534564, Retrieved from the Internet <URL:http://proceedings.mlr.press/v70/kim17b/kim17b.pdf> [retrieved on 20181214]
- WEN JIAHUI ET AL: "Sensor-based adaptive activity recognition with dynamically available sensors", NEUROCOMPUTING, vol. 218, 2 September 2016 (2016-09-02), pages 307 - 317, XP029793128, ISSN: 0925-2312, DOI: 10.1016/J.NEUCOM.2016.08.077
- XIN WANG ET AL: "IDK Cascades: Fast Deep Learning by Learning not to Overthink", 13 September 2017 (2017-09-13), XP055534732, Retrieved from the Internet <URL:https://arxiv.org/pdf/1706.00885v3.pdf> [retrieved on 20181214]

## Description

### Field of the invention

The invention relates to an Artificial intelligence (AI) system, a method for categorizing events, and software for an artificial intelligence (AI) system for categorizing events.

### Background of the invention

Artificial intelligence (AI) is developing rapidly and AI applications are supporting or will support all industries including the aerospace industry, agriculture, chemical industry, computer industry, construction industry, defence industry, education industry, energy industry, entertainment industry, financial services industry, food industry, health care industry, hospitality industry, information industry, manufacturing, mass media, mining, telecommunication industry, transport industry, water industry and direct selling industry.

The ability to monitor and/or to control systems is an area wherein AI can be very useful. Another area is the understanding of human behaviour and interaction. In order to do that, AI systems should be able to detect and to recognize events in real-time. This requires smart approach using software, such as deep neural networks, and powerful computer hardware to execute computations within milliseconds.

In "Computationally Efficient Target Classification in Multispectral Image Data with Deep Neural Networks", November 2016, by Lukas Cavigellia et al. (https://arxiv.org/abs/1611.03130) according to its abstract describes "Detecting and classifying targets in video streams from surveillance cameras is a cumbersome, error-prone and expensive task. Often, the incurred costs are prohibitive for real-time monitoring. This leads to data being stored locally or transmitted to a central storage site for post-incident examination. The required communication links and archiving of the video data are still expensive and this setup excludes pre-emptive actions to respond to imminent threats. An effective way to overcome these limitations is to build a smart camera that analyses the data on-site, close to the sensor, and transmits alerts when relevant video sequences are detected."

In "Embedded Real-Time Fall Detection Using Deep Learning For Elderly Care", November 2017, by Hyunwoo Lee et al. (https://arxiv.org/abs/1711.11200) according to its abstract describes "This paper proposes a real-time embedded fall detection system using a DVS(Dynamic Vision Sensor) that has never been used for traditional fall detection, a dataset for fall detection using that, and a DVS-TN(DVS-Temporal Network). The first contribution is building a DVS Falls Dataset, which made our network to recognize a much greater variety of falls than the existing datasets that existed before and solved privacy issues using the DVS. Secondly, we introduce the DVS-TN : optimized deep learning network to detect falls using DVS. Finally, we implemented a fall detection system which can run on low-computing H/W with real-time, and tested on DVS Falls Dataset that takes into account various falls situations. Our approach achieved 95.5% on the F1-score and operates at 31.25 FPS on NVIDIA Jetson TX1 board."

In "Deep Learning and Data Assimilation for Real-Time Production Prediction in Natural Gas Wells", February 2018, by Kelvin Lohet et al. (https://arxiv.org/abs/1802.05141) according to its abstract describes "The prediction of the gas production from mature gas wells, due to their complex end-of-life behavior, is challenging and crucial for operational decision making. In this paper, we apply a modified deep LSTM model for prediction of the gas flow rates in mature gas wells, including the uncertainties in input parameters. Additionally, due to changes in the system in time and in order to increase the accuracy and robustness of the prediction, the Ensemble Kalman Filter (EnKF) is used to update the flow rate predictions based on new observations. The developed approach was tested on the data from two mature gas production wells in which their production is highly dynamic and suffering from salt deposition. The results show that the flow predictions using the EnKF updated model leads to better Jeffreys' J-divergences than the predictions without the EnKF model updating scheme."

In "Anomaly Detection in a Digital Video Broadcasting System Using Timed Automata", May 2017, by Xiaoran Liu et al. (https://arxiv.org/abs/1705.09650) according to its abstract describes "This paper focuses on detecting anomalies in a digital video broadcasting (DVB) system from providers' perspective. We learn a probabilistic deterministic real timed automaton profiling benign behavior of encryption control in the DVB control access system. This profile is used as a one-class classifier. Anomalous items in a testing sequence are detected when the sequence is not accepted by the learned model."

In "Real-time Road Traffic Information Detection Through Social Media", January 2018, by Chandra Khatri (https://arxiv.org/abs/1801.05088) according to its abstract describes "In current study, a mechanism to extract traffic related information such as congestion and incidents from textual data from the internet is proposed. The current source of data is Twitter. As the data being considered is extremely large in size automated models are developed to stream, download, and mine the data in real-time. Furthermore, if any tweet has traffic related information then the models should be able to infer and extract this data.

Currently, the data is collected only for United States and a total of 120,000 geo-tagged traffic related tweets are extracted, while six million geo-tagged non-traffic related tweets are retrieved and classification models are trained. Furthermore, this data is used for various kinds of spatial and temporal analysis. A mechanism to calculate level of traffic congestion, safety, and traffic perception for cities in U.S. is proposed. Traffic congestion and safety rankings for the various urban areas are obtained and then they are statistically validated with existing widely adopted rankings. Traffic perception depicts the attitude and perception of people towards the traffic.

It is also seen that traffic related data when visualized spatially and temporally provides the same pattern as the actual traffic flows for various urban areas. When visualized at the city level, it is clearly visible that the flow of tweets is similar to flow of vehicles and that the traffic related tweets are representative of traffic within the cities. With all the findings in current study, it is shown that significant amount of traffic related information can be extracted from Twitter and other sources on internet. Furthermore, Twitter and these data sources are freely available and are not bound by spatial and temporal limitations. That is, wherever there is a user there is a potential for data."

US20050102098 according to its abstract describes "A vehicle navigation system that is capable of learning user habits/preferences, mistakes in a digital map database, and new roads that may have been added or constructed after release of the digital map database is disclosed. The vehicle navigation system monitors a driver's habits and updates a database to thereby cause the vehicle navigation system to have a preference for the driver's habits. The vehicle navigation system may also monitor the geographic position of the vehicle and allow the driver to update or change data contained in the digital map database if an error exists. The vehicle navigation system is also capable of learning new roads that exist that are not included in the road network map of the digital map database and is also capable of adding these new roads to the digital map database."

US9763253 according to its abstract describes "A virtual skeleton includes a plurality of joints and provides a machine readable representation of a human subject observed with a sensor such as a depth camera. A gesture detection module is trained via machine learning to identify one or more features of a virtual skeleton and indicate if the feature(s) collectively indicate a particular gesture."

"Deep learning prototype domains for person re-identification" by Arne Schumann et al., ICIP 2017, pages 1767-1771, according to its abstract describes "Person re-identification (re-id) is the task of matching multiple occurrences of the same person from different cameras, poses, lighting conditions, and a multitude of other factors which alter the visual appearance. Typically, this is achieved by learning either optimal features or distance metrics which are adapted to specific pairs of camera views dictated by the pairwise labelled training datasets. In this work, we formulate a deep learning based novel approach to automatic prototype domain discovery for domain perceptive person re-id. The approach scales to new and unseen scenes without requiring new training data. We learn a separate re-id model for each of the discovered prototype-domains and during model deployment, use the person probe image to automatically select the model of the closest prototype-domain. Our approach requires neither supervised nor unsupervised transfer learning, i.e. no data available from target domains. Extensive evaluations are carried out using automatically detected bounding boxes with low-resolution and partial occlusion on two large scale re-id benchmarks, CUHK-SYSU and PRW. Our approach outperforms state-of-the-art unsupervised methods significantly and is competitive against supervised methods which use labelled test domain data."

"Towards a fuzzy-based multi-classifier selection module for activity recognition applications" by Henar Martin et al., 4th International Workshop on Sensor Networks and Ambient Intelligence 2012, Lugano (23 March 2012), pages 871-876, according to its abstract describes "Performing activity recognition using the information provided by the different sensors embedded in a smartphone face limitations due to the capabilities of those devices when the computations are carried out in the terminal. In this work a fuzzy inference module is implemented in order to decide which classifier is the most appropriate to be used at a specific moment regarding the application requirements and the device context characterized by its battery level, available memory and CPU load. The set of classifiers that is considered is composed of Decision Tables and Trees that have been trained using different number of sensors and features. In addition, some classifiers perform activity recognition regardless of the on-body device position and others rely on the previous recognition of that position to use a classifier that is trained with measurements gathered with the mobile placed on that specific position. The modules implemented show that an evaluation of the classifiers allows sorting them so the fuzzy inference module can choose periodically the one that best suits the device context and application requirements." "A Cascade-Classifier Approach for Fall Detection" by I Putu Edy Suardiyana Putra et al., Proceedings of the 5th EAI International Conference on Wireless Mobile Communication and Healthcare "Transforming Healthcare Through Inovations in Mobile and Wireless Technologies", 2015, DOI: 10.4108/eai.14-10-2015.2261619ISBN: 978-1-63190-088-4, describes an energy efficient cascade-classifier for fall detection.

"Energy-efficient adaptive classifier design for mobile systems" by Zafar Takhirow et al., ISLPED '16, August 08-10, 2016, San Francisco Airport, CA, USA, DOI: http:// dx.doi.org/10.1145 /2934583.2934615, according to its abstract describes "With the continuous increase in the amount of data that needs to be processed by digital mobile systems, energy-efficient computation has become a critical design constraint for mobile systems. In this paper, we propose an adaptive classifier that leverages the wide variability in data complexity to enable energy-efficient data classification operations for mobile systems. Our approach takes advantage of varying classification "hardness" across data to dynamically allocate resources and improve energy efficiency. On average, our adaptive classifier is about 100x more energy efficient but has abt. 1% higher error rate than a complex radial basis function classifier and is about 10× less energy efficient but has about 40% lower error rate than a simple linear classifier across a wide range of classification data sets.

### Summary of the invention

The invention is defined by the independent claim. Embodiments of the invention are defined in the dependent claims.

### Brief description of the drawings

Reference is made to the accompanying schematic drawings in which corresponding reference symbols indicate corresponding parts, and in which:
FIG 1. schematically depicts an embodiment of the artificial intelligence (AI) system switching to another state.
FIG 2. schematically depicts an embodiment of the artificial intelligence (AI) system switching to another state and back to its original state.
FIG 3. schematically depicts an embodiment of the artificial intelligence (Al) system switching to multiple other states.
FIG 4. schematically depicts an intelligence (AI) system and various input devices.
FIG 5, an unclaimed embodiment, schematically depicts an embodiment of the artificial intelligence (AI) system in a car switching the autonomous driving level.
FIG 6, an unclaimed embodiment, schematically depicts an embodiment of the artificial intelligence (AI) system in a car detecting a ball on the road and the awareness of a potential dangerous situation.
FIG 7, an unclaimed embodiment, schematically depicts an embodiment of the artificial intelligence (AI) system in a drone flying high and low above the ground.
FIG 8, an unclaimed embodiment, schematically depicts an embodiment of the artificial intelligence (AI) system in a healthcare robot diagnosing a patient.
FIG 9, an unclaimed embodiment, schematically depicts an embodiment of the artificial intelligence (AI) system eavesdropping a communication signal.

The drawings are not necessarily on scale.

### Description of preferred embodiments

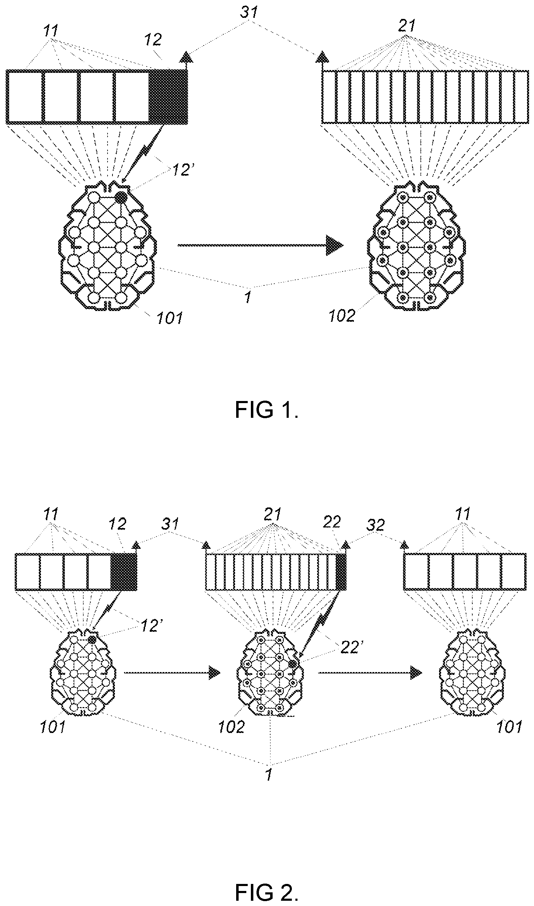

FIG 1. schematically depicts an AI system 1 in state 101 categorizing events in a first category type 11. An event of category type 11 in predefined event category 12 triggers (12') the AI system 1 in state 101 to switch to another state 102 in which the AI system 1 categorizes, from marker 31, subsequent events in a second category type 21.

The second category type 21 encompasses the categorizing of the first category type 11. In an embodiment the frequency of the categorising in state 102 is lower or higher than in state 101. In an embodiment the AI system 1 in state 102 gets less or more data input to process than in state 101, affecting the complexity of categorizing.

The AI system 1 switches to another trained machine learning model in state 102. As a result the power consumption in state 102 can differ from state 101.

FIG 2. schematically depicts an AI system 1 in state 101 categorizing events in a first category type 11. An event of category type 11 in predefined event category 12 triggers (12') the AI system 1 in state 101 to switch to another state 102 in which the AI system 1 categorizes, from marker 31, subsequent events in a second category type 21. An event of category type 21 in predefined event category 22 triggers (22') the AI system 1 in state 102 to switch back to state 101 in which the AI system 1 categorizes, from marker 32, subsequent events in a first category type 11 again.

Likewise, in an embodiment an AI system 1 has more than 2 states. An AI system 1 categorizes events in each state and changes to another state if a predefined event of these events is categorized by an AI system 1.

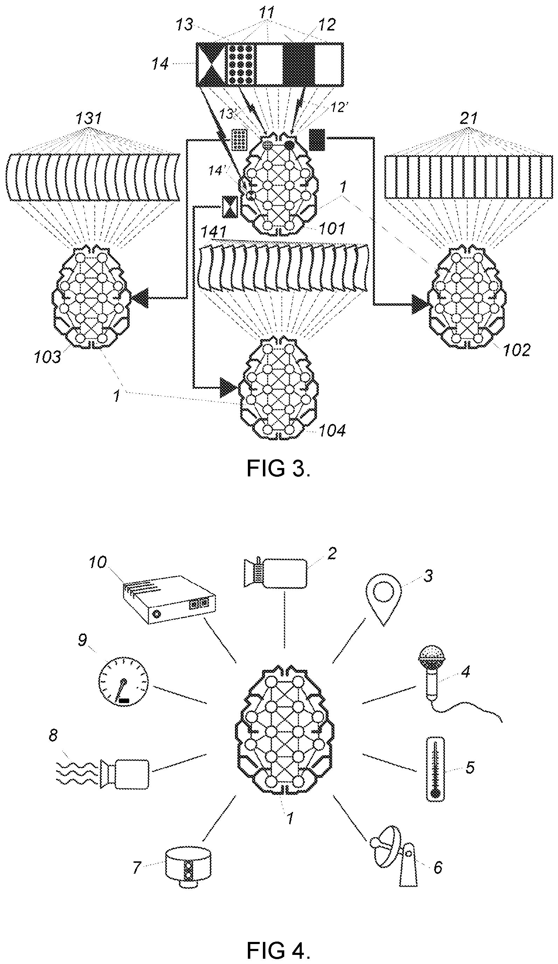

In another embodiment an AI system 1 has multiple predefined event categories in each state as depicted in FIG 3.

FIG 3. schematically depicts an AI system 1 in state 101 categorizing events in a category type 11 with multiple predefined event categories (11, 12, 13 and 14) and switching to multiple states (102, 103 and 104).

Upon categorising an event in predefined event category 14 trigger 14' would set the AI system 1 in state 104 in which the AI system 1 would categorize subsequent events in another category type 141.

Upon categorising an event in predefined event category 13 trigger 13' would set the AI system 1 in state 103 in which the AI system 1 would categorize subsequent events in another category type 131. Upon categorising an event in predefined event category 12 trigger 12' would set the AI system 1 in state 102 in which the AI system 1 would categorize subsequent events in another category type 21.

FIG 4. schematically depicts an AI system 1 operationally coupled to various input devices. In this illustration, the input devices comprising a video camera 2, a GPS device 3, a microphone 4, thermometer 5, a radar 6, a LIDAR 7, an infrared camera 8, an speedometer/odometer 9 and network device 10. Any of these devices capable of providing pictures, image data, or sound data can supply a stream of data. The data is digital by nature or is the result from a converted analogue signal.

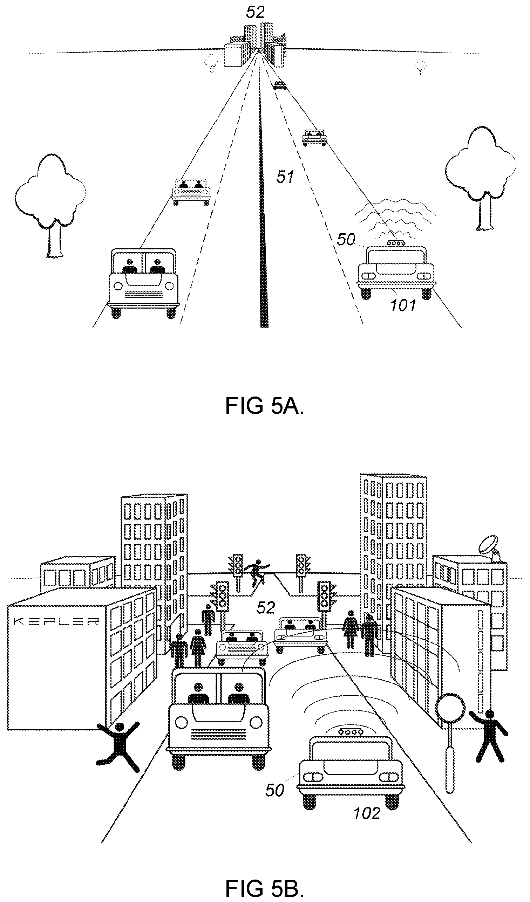

FIG 5A-5B, an unclaimed embodiment, schematically depicts a car 50 with an AI system 1 (FIG 1.) switching its autonomous driving level.

In FIG 5A. an autonomously driving car 50, with an AI system 1 (FIG 1.) in state 101, is cruising in autonomous driving level 4 on a level 4 designated motorway 51. The car 50 is driving towards an urban environment 52 situated outside the level 4 designated motorway 51.

In FIG 5B. the car 50 is entering the urban environment 52. After leaving the level 4 designated motorway 51 (FIG 5A.) the car has automatically switched to autonomous driving level 5, with an AI system 1 (FIG 1.) in state 102.

In an example a car 50 needs more sensors or input devices and using different system resources when switching to the higher autonomous driving level 5, with an AI system 1 (FIG 1.) in state 102.

Car 50 may, after driving in the urban environment 52, return to the level 4 designated motorway 51 (FIG 5A.) and switch back to autonomous driving level 4, with an AI system 1 (FIG 1.) in state 101.

In another example, when a car 50 is not able to drive in autonomous driving level 5, a car 50 could switch automatically to a lower autonomous driving level (level 3, 2 or 1) by safely leaving the autonomous driving level 4, with an AI system 1 (FIG 1.) in state 101, and waiting for the driver to take over control. When switching to a lower autonomous driving level with an AI system 1 (FIG 1.) in state 102, an AI system 1 (FIG 1.) consumes less power since less processing is needed for a less complicated autonomous driving level. Additionally, in a lower autonomous driving level, an AI system 1 (FIG 1.) does not need all the sensors or input devices required in a higher autonomous driving level. Due to this, power consumption of a car 50 will be further reduced. This will extend the driving range of electric cars.

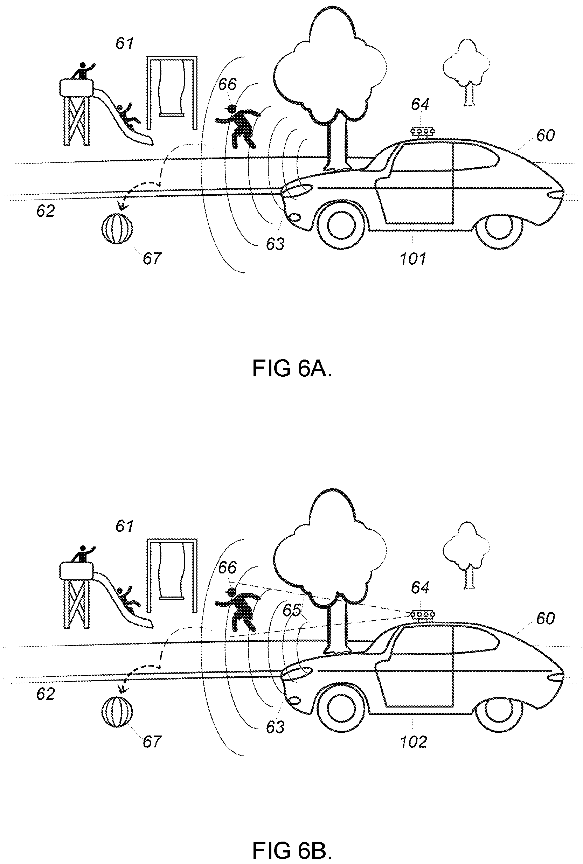

FIG 6A-B, an unclaimed embodiment, schematically depicts a car 60 with an AI system 1 (FIG 1.) in a driving state 101, operationally coupled to sensors 63 and 64, detecting a ball 67 crossing a road 62 and switching an AI system 1 (FIG 1.) to an alert state 102.

In FIG 6A a sensor 63 (for example a camera or a radar) of car 60, with an AI system 1 (FIG 1.) in driving state 101, registers a ball 67 rolling over a road 62 coming from the direction of playground 61. An AI system 1 (FIG 1.) of car 60 categorizes the rolling ball 67 event in a predefined category 12 (FIG 1.) which sets an AI system 1 (FIG 1.) of car 60 to an alert state 102.

In FIG 6B. a sensor 64 (for instance a camera or a lidar) of car 60 is activated. An AI system 1 (FIG 1.) in state 102 is now categorizing events including the detection 65 of child 66.

In another embodiment both sensors (63 and 64) are active in state 101. When in alert state 102 an AI system 1 (FIG 1.) uses another trained machine learning model than in a driving state 101.

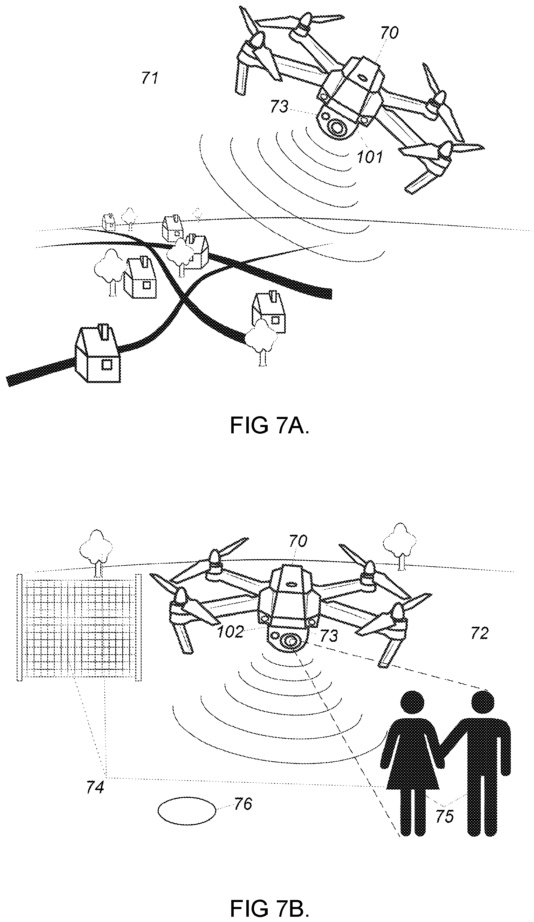

FIG 7A-B, an unclaimed embodiment, schematically depicts a drone 70 with an AI system 1 (FIG 1.) operationally coupled to sensors 73.

In FIG 7A. the drone 70 is flying at a height level 71 above the ground where there is a lot of freedom to fly and wherein an AI system 1 (FIG 1.) of drone 70 is in state 101. In state 101 an AI system 1 (FIG 1.) of drone 70 is using limited resources, such as battery power and data input from its sensors 73, to operate.

In FIG 7B. the drone 70 is flying at a height level 72 above the ground where there are various obstacles 74 which limit the freedom to fly. An AI system 1 (FIG 1.) of drone 70 is in state 102 and prevents the drone 70 to collide with the various obstacles 74. In state 102 an AI system 1 (FIG 1.) of drone 70 is requiring more resources to operate than in state 101.

In an embodiment a drone 70 is used as a military weapon. With an AI system 1 (FIG 1.) in state 102, a drone 70 uses its AI system 1 (FIG 1.) to select a target 75. Instead of preventing a collision an AI system 1 (FIG 1.) is used to collide with the target 75.

In an embodiment a drone 70 is used for transporting goods. With an AI system 1 (FIG 1.) in state 102, a drone 70 uses its AI system 1 (FIG 1.) to select a landing spot 76 to pick up load.

In an embodiment a drone 70 with AI system 1 (FIG 1.) has more than 2 states, for instance for multiple height levels, different environments (open water environment, industrial environment, flight corridor etc.) and various weather conditions.

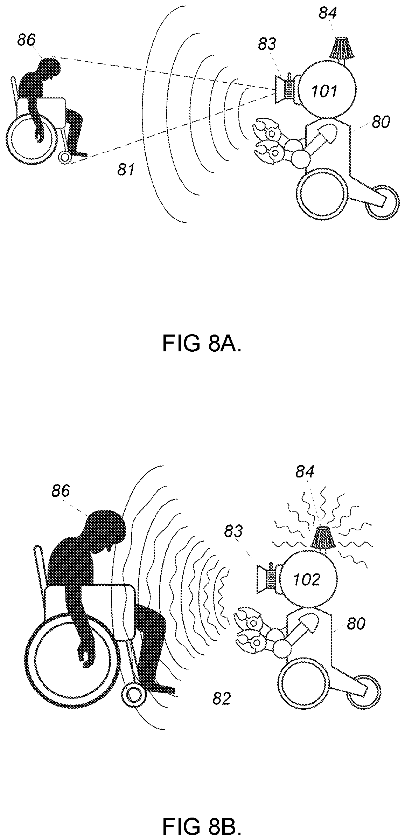

FIG 8A-B, an unclaimed embodiment, schematically depicts a healthcare robot 80 with an AI system 1 (FIG 1.) and operationally coupled to a camera 83 and an air analyzer sensor 84. Upon detecting a patient 86 in a wheelchair the healthcare robot 80 diagnoses the patient' state of health.

In FIG 8A. a camera 83 of healthcare robot 80, with an AI system 1 (FIG 1.) in state 101, registers a patient 86 in a wheelchair at a distance 81. An AI system 1 (FIG 1.) of healthcare robot 80 categorizes the patient 86 in a predefined category 12 (FIG 1.) which triggers healthcare robot 80 to approach the patient 87 and sets an AI system 1 (FIG 1.) of the healthcare robot 80 to state 102 as depicted in FIG 8B.

In FIG 8B. healthcare robot 80 has approached the patient 87 at a closer distance 82 and an air analyzer sensor 84 of healthcare robot 80 is activated. The AI system 1 (FIG 1.) in state 102 is now categorizing events including the data coming from an air analyzer sensor 84.

In an embodiment a healthcare robot 80 with an AI system 1 (FIG 1.) has more then 2 states, for instance to categorize multiple types of patients and to execute different kinds of diagnoses. Patient types include physically and mentally disabled people, as well as healthy and sick people.

In an embodiment, similar to a healthcare robot 80 with an AI system 1 (FIG 1.), healthcare robot 80 is not used for healthcare but for another industry as listed in the paragraph "Background of the invention".

In an embodiment, similar to a healthcare robot 80 with an AI system 1 (FIG 1.), healthcare robot 80 is not a healthcare robot but is a bomb disposal robot.

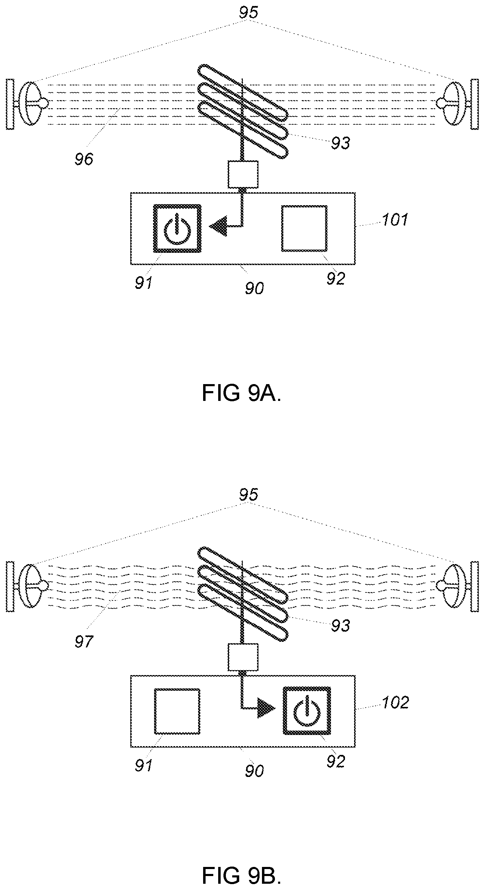

FIG 9A-B, an unclaimed embodiment, schematically depicts an eavesdropping system 90, with an AI system 1 (FIG 1.) operationally coupled to an antenna 93, eavesdropping communication between sender and receiver 95 resulting in a stream of data comprising patterns of data comprising events, and searching for events to analyse in more detail.

In FIG 9A. an AI system 1 (FIG 1.) in state 101 of eavesdropping system 90 categorizes events resulting from signal 96 with a machine learning model 91.

In FIG 9B. an AI system 1 (FIG 1.) in state 102 of eavesdropping system 90 categorizes events resulting from signal 97 with a machine learning model 92.

## Claims

1. An adaptive artificial intelligence (AI) system for categorizing events for switching between different states, said adaptive AI system comprising a first state and a second state, wherein:
- said AI system is in a first state for categorizing events in a first category type;
- upon categorizing of a first event in a predefined category of said first category type, said adaptive AI system is set to said second state, in said second state said adaptive AI system is set for categorizing subsequent events in a second category type,
the adaptive AI system comprising a data input device for providing a stream of data, the input device providing pictures, moving image data or sound data;
wherein said adaptive AI system comprises a data processor and software which when running on said data processor:
- sets said adaptive AI system in said first state;
- receives a stream of data from the input device;
- deducts events from said stream of data;
- categorizes said events in a first category type;
- upon categorizing one of said events as said first event in a predefined category of said first category type, switches said adaptive AI system to said second state, and
- receives subsequent data from the input device;
- deducts subsequent events from said subsequent data;
- categorizes said subsequent events in a second category type,
wherein said adaptive AI system comprises at least two trained machine learning networks, wherein in said first state said adaptive AI system uses a first trained machine learning network of said at least two trained machine learning networks for said categorizing events in said first category type, and in said second state said adaptive AI system uses a second trained machine learning network of said at least two trained machine learning networks for said categorizing events in said second category type, wherein the second category type encompasses the categorizing of the first category type.

2. The AI system of claim 1, wherein said AI system in said second state categorizes said events in real-time.

3. The AI system of claim 1 or 2, wherein said AI system in said first and second state categorizes said events in real-time.

4. The AI system of any one of the preceding claims, wherein upon categorizing said subsequent events in a predefined category of said second category type, said AI system returns to said first state.

5. The AI system of any one of the preceding claims, wherein in said second state said AI system for categorizing an event uses at least one selected from:
different system resources, different data, more system resources, more time, more energy, more data, less system resources, less time, less energy, less data, in comparison to categorizing an event in said first state.

6. The AI system of any one of the preceding claims, wherein said AI system comprises a series of states comprising said first and second state, and wherein each of said states comprises a category type, resulting in a series of category types comprising said first and second category type, in particular wherein said AI system changes between states of said series of states, and/or wherein at least one category type of at least one of said states comprises a series of said predefined categories, each predefined category linking to at least one of said states, wherein categorizing of an event in one of said predefined categories causes said AI system to be set another of said series of states, and/or
wherein each category type of each of said series of states comprises at least one predefined category, and wherein categorizing an event in said predefined category results in a change of state.

7. The AI system of any one of the preceding claims, further comprising a sensor operationally coupled to said data input device.

## Patentansprüche

1. Adaptives System der künstlichen Intelligenz (AI) zum Kategorisieren von Ereignissen zum Umschalten zwischen verschiedenen Zuständen, wobei das adaptive AI-System einen ersten Zustand und einen zweiten Zustand umfasst, wobei:
- das KI-System sich in einem ersten Zustand zur Kategorisierung von Ereignissen in einen ersten Kategorietyp befindet;
- nach der Kategorisierung eines ersten Ereignisses in einer vordefinierten Kategorie des ersten Kategorietyps das adaptive KI-System in den zweiten Zustand versetzt wird, wobei das adaptive KI-System in dem zweiten Zustand für die Kategorisierung nachfolgender Ereignisse in einem zweiten Kategorietyp eingestellt ist,
das adaptive KI-System eine Dateneingabevorrichtung zur Bereitstellung eines Datenstroms umfasst, wobei die Eingabevorrichtung Bilder, Bewegtbilddaten oder Tondaten bereitstellt;
wobei das adaptive KI-System einen Datenprozessor und Software umfasst, die, wenn sie auf dem Datenprozessor läuft, das adaptive KI-System in den zweiten Kategorietyp versetzt:
- das adaptive KI-System in den ersten Zustand versetzt;
- einen Datenstrom von der Eingabevorrichtung empfängt;
- Ereignisse aus dem Datenstrom ableitet;
- die Ereignisse in einen ersten Kategorietyp kategorisiert;
- bei der Kategorisierung eines der Ereignisse als das erste Ereignis in einer vordefinierten Kategorie des ersten Kategorietyps das adaptive KI-System in den zweiten Zustand schaltet, und
- empfängt nachfolgende Daten von der Eingabevorrichtung;
- die nachfolgenden Ereignisse aus den nachfolgenden Daten ableitet;
- kategorisiert die nachfolgenden Ereignisse in einen zweiten Kategorietyp,
wobei das adaptive KI-System mindestens zwei trainierte maschinelle Lernnetzwerke umfasst, wobei in dem ersten Zustand das adaptive KI-System ein erstes trainiertes maschinelles Lernnetzwerk der mindestens zwei trainierten maschinellen Lernnetzwerke für die Kategorisierung von Ereignissen in dem ersten Kategorietyp verwendet, und in dem zweiten Zustand das adaptive KI-System ein zweites trainiertes maschinelles Lernnetzwerk der mindestens zwei trainierten maschinellen Lernnetzwerke für die Kategorisierung von Ereignissen in dem zweiten Kategorietyp verwendet, wobei der zweite Kategorietyp die Kategorisierung des ersten Kategorietyps umfasst.

2. Das KI-System nach Anspruch 1, wobei das KI-System in dem zweiten Zustand die Ereignisse in Echtzeit kategorisiert.

3. Das KI-System nach Anspruch 1 oder 2, wobei das KI-System im ersten und zweiten Zustand die Ereignisse in Echtzeit kategorisiert.

4. Das KI-System nach einem der vorhergehenden Ansprüche, wobei das KI-System nach der Einordnung der nachfolgenden Ereignisse in eine vordefinierte Kategorie des zweiten Kategorietyps in den ersten Zustand zurückkehrt.

5. Das KI-System nach einem der vorhergehenden Ansprüche, wobei in dem zweiten Zustand das KI-System zur Kategorisierung eines Ereignisses mindestens eines der folgenden Elemente verwendet:
unterschiedliche Systemressourcen, unterschiedliche Daten, mehr Systemressourcen, mehr Zeit, mehr Energie, mehr Daten, weniger Systemressourcen, weniger Zeit, weniger Energie, weniger Daten, im Vergleich zur Kategorisierung eines Ereignisses im ersten Zustand., wobei Sammelmittel an den Positionierungsmitteln angebracht sind.

6. Das KI-System nach einem der vorhergehenden Ansprüche, wobei das KI-System eine Reihe von Zuständen umfasst, die den ersten und den zweiten Zustand umfassen, und wobei jeder der Zustände einen Kategorietyp umfasst, was zu einer Reihe von Kategorietypen führt, die den ersten und den zweiten Kategorietyp umfassen, insbesondere wobei das KI-System zwischen Zuständen der Reihe von Zuständen wechselt, und/oder
wobei mindestens ein Kategorietyp von mindestens einem der Zustände eine Reihe der vordefinierten Kategorien umfasst, wobei jede vordefinierte Kategorie mit mindestens einem der Zustände verknüpft ist, wobei die Kategorisierung eines Ereignisses in einer der vordefinierten Kategorien bewirkt, dass das KI-System in einen anderen der Reihe von Zuständen versetzt wird, und/oder
wobei jeder Kategorietyp jeder der Reihen von Zuständen mindestens eine vordefinierte Kategorie umfasst, und wobei die Kategorisierung eines Ereignisses in die vordefinierte Kategorie zu einer Änderung des Zustands führt.

7. Das KI-System nach einem der vorhergehenden Ansprüche umfasst ferner einen Sensor, der mit der Dateneingabevorrichtung gekoppelt ist.

## Revendications

1. Un système d'intelligence artificielle (IA) adaptatif pour catégoriser des événements afin de passer d'un état à l'autre, ledit système d'IA adaptatif comprenant un premier état et un second état, dans lequel :
- ledit système d'IA est dans un premier état pour catégoriser les événements dans un premier type de catégorie ;
- lors de la catégorisation d'un premier événement dans une catégorie prédéfinie dudit premier type de catégorie, ledit système d'IA adaptatif est placé dans le second état, dans lequel ledit système d'IA adaptatif est placé pour catégoriser les événements suivants dans un second type de catégorie,
le système d'IA adaptatif comprend un dispositif d'entrée de données pour fournir un flux de données, le dispositif d'entrée fournissant des images, des données d'images animées ou des données sonores ;
dans lequel ledit système d'IA adaptatif comprend un processeur de données et un logiciel qui, lorsqu'il est exécuté sur ledit processeur de données :
- place ledit système d'IA adaptatif dans le premier état ;
- reçoit un flux de données du dispositif d'entrée ;
- déduit des événements de ce flux de données ;
- catégorisé ces événements dans un premier type de catégorie ;
- en catégorisant l'un de ces événements comme premier événement dans une catégorie prédéfinie de ce premier type de catégorie, fait passer le système d'IA adaptatif dans le second état, et
- reçoit des données ultérieures du dispositif d'entrée ;
- déduit les événements ultérieurs de ces données ultérieures ;
- catégorise lesdits événements ultérieurs dans un deuxième type de catégorie,
dans lequel ledit système d'IA adaptatif comprend au moins deux réseaux d'apprentissage automatique entraînés, dans lequel, dans le premier état, ledit système d'IA adaptatif utilise un premier réseau d'apprentissage automatique entraîné parmi lesdits au moins deux réseaux d'apprentissage automatique entrainés pour catégoriser les événements dans le premier type de catégorie, et dans le deuxième état, ledit système d'IA adaptatif utilise un deuxième réseau d'apprentissage automatique entraîné parmi lesdits au moins deux réseaux d'apprentissage automatique entrainés pour catégoriser les événements dans le deuxième type de catégorie, dans lequel le deuxième type de catégorie englobe le catégorisé dans le premier type de catégorie.

2. Le système d'IA de la revendication 1, dans lequel ledit système d'IA dans le second état catégorise les événements en temps réel.

3. Le système d'IA de la revendication 1 ou 2, dans lequel ledit système d'IA dans les premier et deuxième états catégorise les événements en temps réel.

4. Le système d'IA de l'une des revendications précédentes, dans lequel, après avoir catégorisé lesdits événements ultérieurs dans une catégorie prédéfinie de ce deuxième type de catégorie, le système d'IA revient au premier état.

5. Le système d'IA de l'une des revendications précédentes, dans lequel, dans le second état, le système d'IA pour catégoriser un événement utilise au moins l'un des éléments suivants :
des ressources système différentes, des données différentes, plus de ressources système, plus de temps, plus d'énergie, plus de données, moins de ressources système, moins de temps, moins d'énergie, moins de données, par rapport à la catégorisation d'un événement dans le premier état.

6. Le système d'IA de l'une des revendications précédentes, dans lequel ledit système d'IA comprend une série d'états comprenant ledit premier et second état, et dans lequel chacun de ces états comprend un type de catégorie, résultant en une série de types de catégories comprenant ledit premier et second type de catégorie, en particulier dans lequel ledit système d'IA change entre les états de ladite série d'états, et/ou
dans lequel au moins un type de catégorie d'au moins un desdits états comprend une série de catégories prédéfinies, chaque catégorie prédéfinie étant liée à au moins un desdits états, la catégorisation d'un événement dans l'une desdites catégories prédéfinies amenant le système d'IA à se placer dans une autre de ces séries d'états, et/ou
dans lequel chaque type de catégorie de chacune desdites séries d'états comprend au moins une catégorie prédéfinie, et dans lequel la catégorisation d'un événement dans ladite catégorie prédéfinie entraîne un changement d'état.

7. Le système d'IA de l'une des revendications précédentes comprend en outre un capteur couplé de manière opérationnelle à ce dispositif d'entrée de données.
